# EUROPEAN PATENT APPLICATION

(11) **EP 4 819 335 A1**
(43) Date of publication of application: **07.10.2026**
(21) Application number: 24897545.0
(22) Date of filing: 26.11.2024
(51) Int. Cl.: H01M 50/291, H01G 11/80, H01G 11/82, H01M 50/213, H01M 50/503, H01M 50/545, H01M 50/55, H01M 50/559, H01M 50/56

(54) **ELECTRICITY STORAGE MODULE**

(30) Priority: 30.11.2023 JP 2023202966
(71) Applicant: Panasonic Intellectual Property Management Co., Ltd., Kadoma-shi, Osaka 571-0057 (JP)
(72) Inventor: OGINO, Hirotaka, Kadoma-shi, Osaka 571-0057 (JP); NAGATA, Keisuke, Kadoma-shi, Osaka 571-0057 (JP)
(74) Representative: Eisenführ Speiser
(86) International application number: PCT/JP2024/041847
(87) International publication number: WO 2025/115861

(57) **Abstract**

Provided is power storage module (10) including power storage device (20) which has an inner terminal and an outer terminal and has a cylindrical shape, upper holder (40) which holds an upper end of power storage device (20) on a first axis, and negative electrode lead (62). A positive-electrode terminal and a negative-electrode terminal are disposed in power storage device (20), the negative-electrode terminal is disposed outside the positive-electrode terminal in a radial direction of power storage device (20), and negative electrode lead (62) is connected to the negative-electrode terminal. Upper holder (40) has container (41) that accommodates an upper end portion of power storage device (20), and second opening portion (44) that exposes a part of the negative-electrode terminal to which negative electrode lead (62) is connected, and gap (45) that is provided at a position different from that of second opening portion (44) in a radial direction orthogonal to an axial direction and forms a predetermined gap with the negative-electrode terminal are formed in container (41).

## Description

### TECHNICAL FIELD

The present disclosure relates to a power storage module.

### BACKGROUND ART

A power storage module is used as a power source including a plurality of power storage devices. Further, in a power storage module, a positive electrode and a negative electrode may be disposed on one side of a power storage device, and a positive electrode lead and a negative electrode lead may be disposed on one side of the power storage module (for example, PTL 1).

### Citation List

### Patent Literature

PTL 1: Unexamined Japanese Patent Publication No. 2021-136238

### SUMMARY OF THE INVENTION

Since a power storage module is used for a long period of time, it is required to maintain reliability for a long period of time.

A power storage module according to the present disclosure includes a power storage device having an inner terminal and an outer terminal and having a cylindrical shape, a holder that holds one end portion of the power storage device on a first axis, and an outer lead. The inner terminal and the outer terminal are disposed at the one end portion of the power storage device, the outer terminal is disposed outside the inner terminal in a radial direction of the power storage device, the outer lead is connected to the outer terminal, the holder includes a container that accommodates the one end portion of the power storage device, and the container includes an outer opening portion that exposes a part of the outer terminal to which the outer lead is connected, and a gap provided at a position different from the outer opening portion and forming a predetermined gap with the outer terminal on a second axis orthogonal to the first axis.

According to the power storage module of the present disclosure, reliability can be improved.

### BRIEF DESCRIPTION OF THE DRAWINGS

Fig. 1 is a perspective view illustrating a power storage module which is an example of an exemplary embodiment.
Fig. 2 is a side cross-sectional view illustrating a power storage device which is an example of the exemplary embodiment.
Fig. 3 is a plan view illustrating an upper holder which is an example of the exemplary embodiment.
Fig. 4 is a perspective view illustrating the upper holder which is an example of the exemplary embodiment as viewed from the bottom side.
Fig. 5 is a perspective view illustrating the upper holder according to another example of the exemplary embodiment as viewed from the bottom side.
Fig. 6 is a perspective view illustrating the upper holder which is another example of the exemplary embodiment as viewed from the bottom side.
Fig. 7 is a schematic view illustrating a process of a method of replacing the power storage device.
Fig. 8 is a schematic view illustrating a process of the method of replacing the power storage device as a comparative example.

### DESCRIPTION OF EMBODIMENT

Hereinafter, an example of an exemplary embodiment of the present disclosure will be described in detail. In the following description, specific shapes, materials, directions, numerical values, etc. are examples illustrated to facilitate understanding of the present disclosure and may be changed as appropriate to suit uses, purposes, specifications, or other requirements.

### [Power storage module]

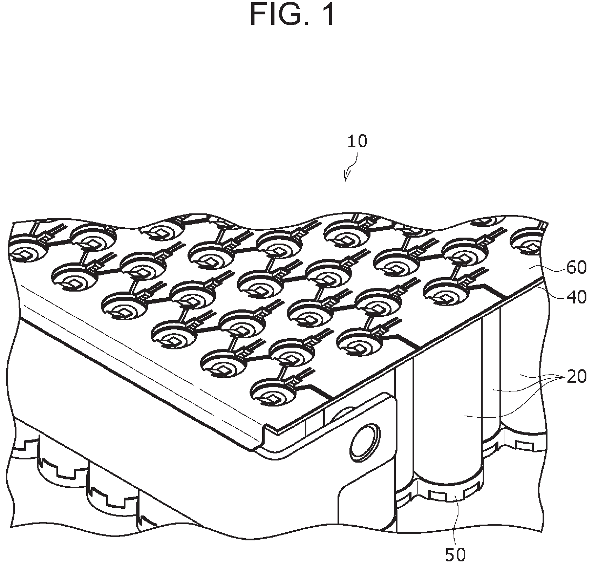

Power storage module 10, which is an example of an exemplary embodiment, will be described with reference to Fig. 1.

Power storage module 10 is installed in an electric vehicle as a power source of a motor that drives the electric vehicle. However, the power storage module of the present disclosure is not limited to installation in an electric vehicle and, for example, may be used as a power source of an electric device driven by a motor such as a power tool, a power-assisted bicycle, an electric motorcycle, an electric wheelchair, an electric tricycle, or an electric cart. The application of the power storage module of the present disclosure is not limited, and power storage module may be used as a power source of various electric devices used indoors and outdoors, such as a cleaner, a wireless device, a lighting device, a digital camera, and a video camera.

Hereinafter, each member of power storage module 10 may be described using an axial direction (first axis), a radial direction, or a circumferential direction with respect to power storage device 20 having a cylindrical shape described later.

Power storage module 10 includes a plurality of power storage devices 20, upper holder 40 as a holder for holding the upper side of power storage device 20, lower holder 50 for holding the lower side of power storage device 20, and current collector plate 60 which is disposed on an upper surface of upper holder 40, connects positive-electrode terminals as first terminals to each other, and connects negative-electrode terminals as second terminals to each other.

A plurality of power storage devices 20 may be densely packed in power storage module 10 in consideration of safety, and adjacent power storage devices 20 may be arranged substantially close to each other. In power storage device 20, for example, in plan view, six power storage devices 20 may be arranged so as to surround single power storage device 20 (or arranged in a staggered arrangement). In addition, a plurality of power storage devices may be arranged such that power storage devices closest to four sides are arranged.

### [Power storage device]

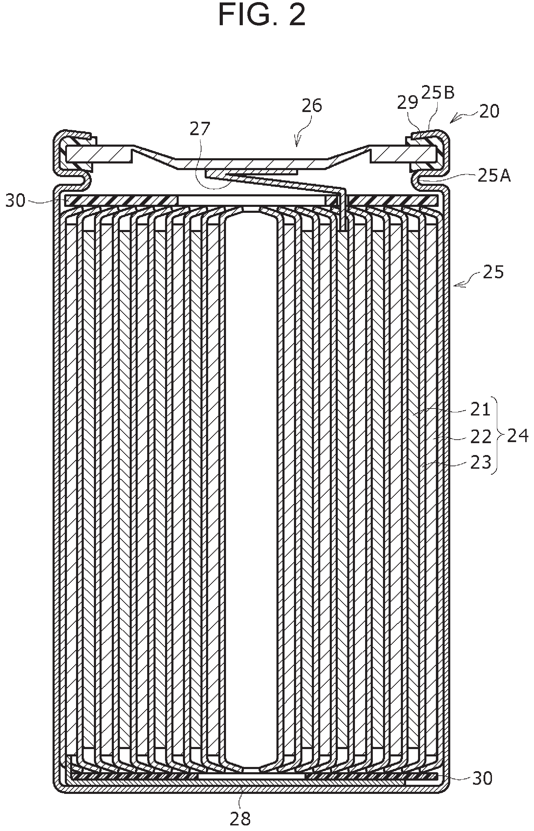

Power storage device 20, which is an example of the exemplary embodiment, will be described in detail with reference to Fig. 2.

In the present exemplary embodiment, a cylindrical lithium ion secondary battery is used as power storage device 20, but power storage device 20 may be a nickel-metal hydride battery, a capacitor or the like. Power storage device 20 includes, for example, electrode group 24 in which strip-shaped positive electrode 21 and strip-shaped negative electrode 22 are wound with strip-shaped separator 23 interposed between them, cylindrical exterior can 25 containing electrode group 24 together with an electrolyte solution, sealing body 26 sealing an opening provided at one end in an axial direction of exterior can 25 in an insulated state, foil-shaped positive electrode tab 27 electrically connecting positive electrode 21 and sealing body 26, and negative electrode tab 28 electrically connecting negative electrode 22 and exterior can 25. Insulating gasket 29 may be disposed between an outer periphery of sealing body 26 and an inner peripheral surface of the opening of exterior can 25.

Annular groove portion 25A is formed on the opening portion side of an outer peripheral surface of exterior can 25. Groove portion 25A is formed as an annular protrusion on an inner peripheral face of exterior can 25. Gasket 29 and sealing body 26 are disposed on an annular protrusion in exterior can 25. Then, an opening end of exterior can 25 is crimped so as to be bent toward the inside of exterior can 25 while gasket 29 is disposed on an inner peripheral side. Sealing body 26 is sandwiched by the crimped opening end and the protrusion in the axial direction through gasket 29, so that the opening of exterior can 25 is sealed.

Sealing body 26 is provided with a current interruption mechanism (CID) or an exhaust valve that ruptures in a case where the inside of exterior can 25 reaches predetermined pressure or more. Further, insulating plate 30 for insulating electrode group 24 from exterior can 25 may be provided between electrode group 24 and a bottom portion of exterior can 25 or between electrode group 24 and the protrusion (groove portion 25A). In a case where insulating plate 30 is provided, positive electrode tab 27 may extend through a through-hole formed in insulating plate 30. Negative electrode tab 28 may pass through the through-hole formed in insulating plate 30 or may extend while bypassing insulating plate 30.

In power storage device 20, a positive-electrode terminal as a first terminal is formed on a top surface of sealing body 26, and a negative-electrode terminal as a second terminal is formed on shoulder portion 25B of exterior can 25. Positive electrode lead 61 as a first lead of current collector plate 60 is joined to a top surface of sealing body 26 as a positive-electrode terminal as a first terminal by welding. Negative electrode lead 62 as a second lead of current collector plate 60 is joined to shoulder portion 25B of exterior can 25 as a negative-electrode terminal as a second terminal by welding. Note that in the power storage module of the present disclosure, the first terminal may be a negative electrode, and the second terminal may be a positive electrode.

Note that the first terminal may be referred to as an "inner terminal", and the second terminal may be referred to as an "outer terminal".

Furthermore, positive electrode lead 61 may be referred to as a "first lead" or an "inner lead", and negative electrode lead 62 may be referred to as a "second lead" or an "outer lead".

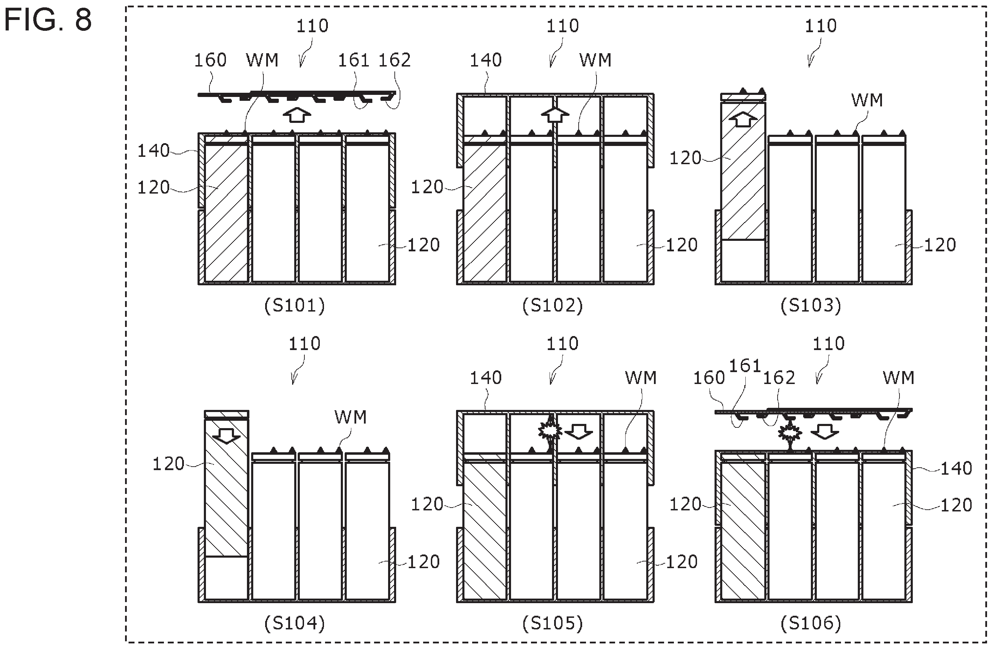

[Method of replacing power storage device of comparative example] A method of replacing power storage device 120 in power storage module 110 of a comparative example will be described with reference to Fig. 8.

In power storage module 110, in a case where a failure occurs in one power storage device 120 among a plurality of power storage devices 120, only power storage device 120 in which the failure occurs may be replaced. Hereinafter, a method of replacing power storage device 120 in power storage module 110 of the comparative example will be described. Note that power storage module 110 and power storage device 120 of the comparative example have substantially the same configurations as power storage module 10 and power storage device 20 described above.

In step S101, in power storage module 110, current collector plates 160 are removed from all power storage devices 120. More specifically, positive electrode lead 161 and negative electrode lead 162 are removed from all power storage devices 120. At this time, welding marks WM remain on a positive-electrode terminal (top surface of sealing body 126) and a negative-electrode terminal (shoulder portion 125B of exterior can 125) of power storage device 120. In step S102, upper holder 140 is removed from power storage module 110.

In step S103, only power storage device 120 in which a failure occurs is removed from power storage module 110. In step S104, replaced power storage device 120 is installed in power storage module 110. In step S105, upper holder 140 is attached to power storage module 110. At this time, welding mark WM of negative electrode lead 162 removed in step S101 may interfere with upper holder 140.

In step S106, in power storage module 110, current collector plates 160 are attached to all power storage devices 120. More specifically, positive electrode lead 161 and negative electrode lead 162 are attached to all power storage devices 120. At this time, in power storage device 120 which is not to be replaced, welding mark WM of positive electrode lead 161 removed in step S101 may hinder re-welding.

In view of the above, hereinafter, a configuration of upper holder 40 of power storage module 10 and a joining portion of positive electrode lead 61 for solving the above-mentioned problem will be described.

### [Upper holder]

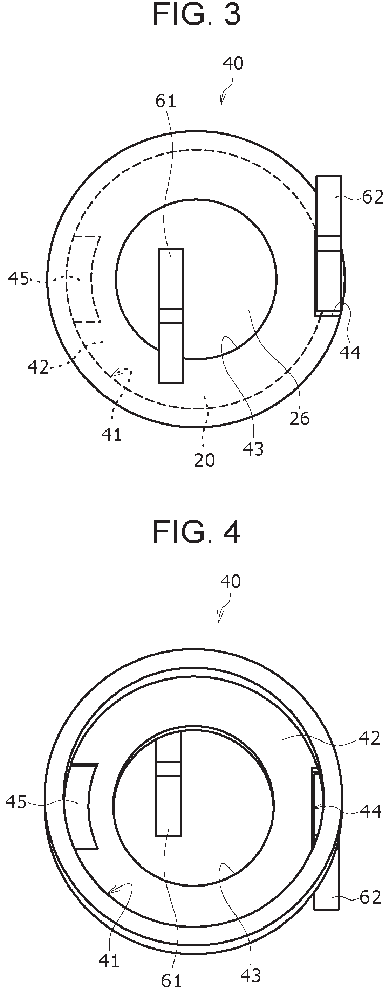

Upper holder 40 will be described with reference to Figs. 3 and 4.

As described above, upper holder 40 is a member that holds the upper side of power storage device 20. According to upper holder 40, although details will be described later, in a case where positive electrode lead 61 and negative electrode lead 62 are removed from power storage device 20 which is not to be replaced in order to replace one of power storage devices 20 in power storage module 10, and positive electrode lead 61 and negative electrode lead 62 are welded again, welding mark WM of power storage device 20 which is not to be replaced does not hinder welding in a case where positive electrode lead 61 or negative electrode lead 62 is welded again. By this, in power storage module 10, one of power storage devices 20 can be replaced a plurality of times and hence, reliability of power storage module 10 can be maintained for a long period of time.

For example, upper holder 40 is formed of thermoplastic resin. The thermoplastic resin is roughly classified into general-purpose plastics and engineering plastics, and polycarbonate, polybutylene terephthalate, polyethylene, polypropylene, polyamide, ABS, or the like is used as the thermoplastic resin. On upper holder 40, container 41, top surface portion 42, first opening portion 43, second opening portion 44, and gap 45, which will be described in detail later, are formed. Note that, in upper holder 40, container 41 and top surface portion 42 are not necessarily formed of an integrated molded product. Container 41 and top surface portion 42 may be formed of separate members, and may be assembled to constitute upper holder 40.

Note that first opening portion 43 may be referred to as an "inner opening portion", and second opening portion 44 may be referred to as an "outer opening portion".

Container 41 is a portion in which an upper end portion of power storage device 20 is accommodated. Container 41 is formed in a circular shape when viewed from the axial direction. Container 41 is formed such that six containers 41 surround one container 41 in plan view, for example. Top surface portion 42 is formed in container 41. Top surface portion 42 is a portion facing an upper end surface (top surface) of power storage device 20. On top surface portion 42, first opening portion 43, second opening portion 44, and gap 45, which will be described in detail later, are formed. Note that first opening portion 43 and second opening portion 44 may be disposed at an interval from each other, or may communicate with each other to form one opening portion.

First opening portion 43 is a portion which exposes a top surface of sealing body 16 of power storage device 20 which is a positive-electrode terminal as a first terminal. Positive electrode lead 61 of current collector plate 60 as a first lead is joined to a top surface of sealing body 16 exposed from first opening portion 43 by welding. First opening portion 43 is formed in a circular shape at a substantially central portion of top surface portion 42 in plan view (on a second axis (plane) orthogonal to the first axis). Although details will be described later, positive electrode lead 61 is joined by welding while being offset from a center portion of a top surface of sealing body 16 of power storage device 20 in plan view (on the second axis (plane) orthogonal to the first axis).

Second opening portion 44 is a portion which exposes shoulder portion 25B of exterior can 25 of power storage device 20 which is a negative-electrode terminal as the second terminal. Negative electrode lead 62 of current collector plate 60 as a second lead is joined to shoulder portion 25B of exterior can 25 exposed from second opening portion 44 by welding.

Gap 45 is a portion where welding mark WM of power storage device 20 which is not to be replaced is arranged after power storage device 20 which is not to be replaced is rotated by approximately 180° in plan view (on the second axis (plane) orthogonal to the first axis) in a case where negative electrode lead 62 of current collector plate 60 is removed from shoulder portion 25B of exterior can 25 of all power storage devices 20 and negative electrode lead 62 is welded again to shoulder portion 25B of exterior can 25 of all power storage devices 20 in order to replace one of power storage devices 20 in power storage module 10. By this, in power storage module 10, one of power storage devices 20 can be replaced and hence, reliability of power storage module 10 can be maintained for a long period of time.

Gap 45 is formed in top surface portion 42 as a groove portion (recessed portion) so as to form a predetermined gap with shoulder portion 25B of exterior can 25 which is a negative-electrode terminal as the second terminal. A plurality of gaps 45 are preferably formed. Further, second opening portions 44 and a plurality of gaps 45 are preferably formed at equal intervals in a circumferential direction of power storage device 20 (circular container 41). Note that in a case where welding mark WM is formed on an outer peripheral surface of power storage device 20, gap 45 may be formed on an inner peripheral surface of container 41. Further, gap 45 may be a through-hole penetrating top surface portion 42 as long as gap 45 is intermittently formed in the circumferential direction. Further, in order for stable holding of power storage device 20 in container 41, gap 45 may be disposed apart from first opening portion 43 in a radial direction of power storage device 20.

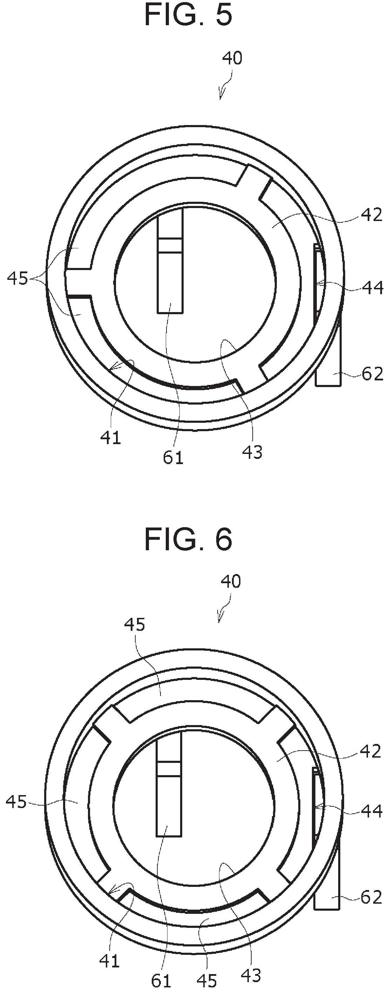

Upper holder 40 as another example of the exemplary embodiment will be described with reference to Figs. 5 and 6.

As illustrated in Fig. 5, second opening portion 44 and a plurality of gaps 45 are formed at equal intervals at 120° intervals in top surface portion 42 (outer peripheral portion) of container 41. With such a configuration, welding mark WM is arranged in gap 45 by rotating power storage device 20 which is not to be replaced by approximately 120° in the circumferential direction in a case where negative electrode lead 62 of current collector plate 60 is removed from shoulder portion 25B of exterior can 25 of all power storage devices 20 and negative electrode lead 62 is welded again to shoulder portion 25B of exterior can 25 of all power storage devices 20 in order to replace one of power storage devices 20 in power storage module 10.

As illustrated in Fig. 6, second opening portion 44 and a plurality of gaps 45 are formed at equal intervals at 90° intervals in top surface portion 42 (outer peripheral portion) of container 41. With such a configuration, welding mark WM is arranged in gap 45 by rotating power storage device 20 which is not to be replaced by approximately 90° in plan view in a case where negative electrode lead 62 of current collector plate 60 is removed from shoulder portion 25B of exterior can 25 of all power storage devices 20 and negative electrode lead 62 is welded again to shoulder portion 25B of exterior can 25 of all power storage devices 20 in order to replace one of power storage devices 20 in power storage module 10.

### [Lower holder]

Lower holder 50 will be described with reference to Fig. 1 again.

As described above, lower holder 50 holds the lower side of power storage device 20. For example, lower holder 50 is formed of thermoplastic resin. The thermoplastic resin is roughly classified into general-purpose plastics and engineering plastics, and polyethylene, polypropylene, polyamide, ABS, or the like is used as the thermoplastic resin.

### [Current collector plate]

Current collector plate 60 will be described with reference to Figs. 1, 3, and 4.

As described above, current collector plate 60 is disposed on an upper surface of upper holder 40, and is a member that connects the positive-electrode terminals as the first terminals to each other and connects the negative-electrode terminals as the second terminals to each other. Current collector plate 60 is formed of a conductive metal sheet. In current collector plate 60, positive electrode lead 61 as a first lead extending from an end of current collector plate 60, negative electrode lead 62 as a second lead extending from an end of current collector plate 60, and opening portion 63, each of which will be described in detail later, are formed.

As described above, positive electrode lead 61 as the first lead is a portion which connects the positive-electrode terminals (top surfaces of sealing bodies 26 of power storage devices 20) as the first terminals to each other. Positive electrode lead 61 is joined to a top surface of sealing body 26 exposed from first opening portion 43 of upper holder 40 by welding. Positive electrode lead 61 is formed in a strip shape and extends to the inside of opening portion 63. Positive electrode lead 61 is joined by welding in a state of being offset from a center portion of a top surface of sealing body 26 of power storage device 20 in plan view (on the second axis (plane) orthogonal to the first axis).

By this, it is possible to prevent welding mark WM of power storage device 20 which is not to be replaced from interfering with welding in a case where positive electrode lead 61 is welded again in a case where positive electrode lead 61 of current collector plate 60 is removed from top surfaces of sealing bodies 26 of all power storage devices 20 and positive electrode lead 61 is welded again to top surfaces of sealing bodies 26 of all power storage devices 20 in order to replace one of power storage devices 20 in power storage module 10. By this, in power storage module 10, one of power storage devices 20 can be replaced a plurality of times and hence, reliability of power storage module 10 can be maintained for a long period of time.

As described above, negative electrode lead 62 as the second lead is a portion which connects negative-electrode terminals (shoulder portions 25B of exterior can 25 of power storage device 20) as the second terminals to each other. Negative electrode lead 62 is joined to shoulder portion 25B of exterior can 25 of power storage device 20 exposed from second opening portion 44 of upper holder 40 by welding. Negative electrode lead 62 is formed in a strip shape and extends to the inside of opening portion 63. Opening portion 63 is formed at a position corresponding to first opening portion 43 of upper holder 40.

### [Method of replacing power storage device]

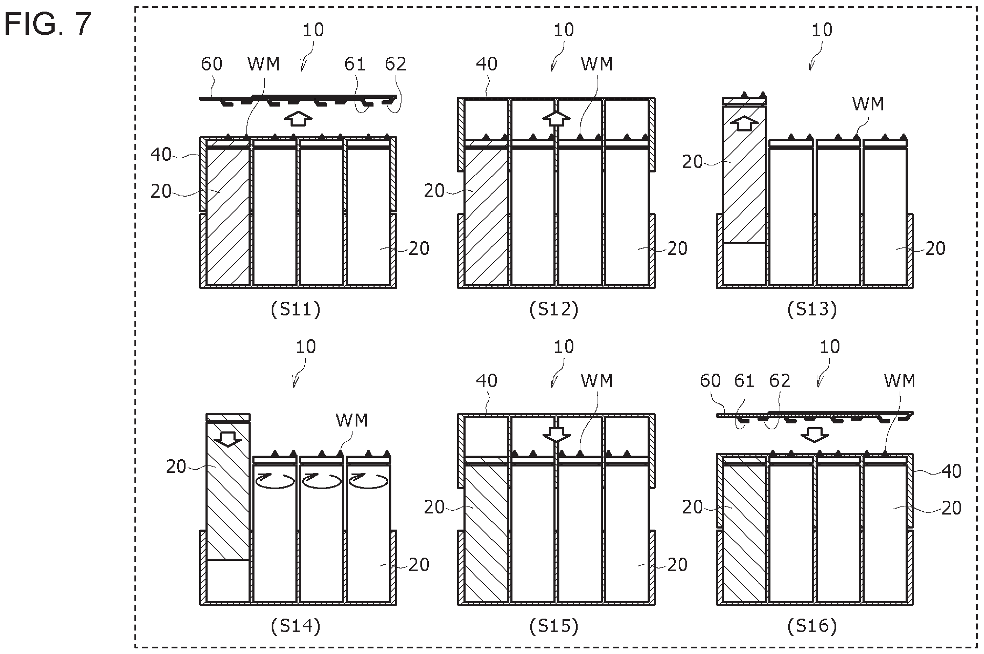

A method of replacing power storage device 20 in power storage module 10 will be described with reference to Fig. 7.

In power storage module 10, in a case where a failure occurs in one power storage device 20 among a plurality of power storage devices 20, only power storage device 20 in which the failure occurs may be replaced. Hereinafter, the method of replacing power storage device 20 in power storage module 10 will be described.

In step S11, in power storage module 10, current collector plates 60 are removed from all power storage devices 20. More specifically, positive electrode lead 61 and negative electrode lead 62 are removed from all power storage devices 20. At this time, welding marks WM remain on the positive-electrode terminal (the top surface of sealing body 26) and the negative-electrode terminal (shoulder portion 25B of exterior can 25) of power storage device 20. In step S12, upper holder 40 is removed from power storage module 10.

In step S13, only power storage device 20 in which a failure occurs is removed from power storage module 10. In step S14, replaced power storage device 20 is installed in power storage module 10, and power storage device 20 which is not to be replaced is rotated by a predetermined angle (for example, 180°) in plan view. In step S15, upper holder 40 is attached to power storage module 10. At this time, welding mark WM of negative electrode lead 62 removed in step S11 is arranged in gap 45 of upper holder 40.

In step S16, in power storage module 10, current collector plates 60 are attached to all power storage devices 20. More specifically, positive electrode lead 61 and negative electrode lead 62 are attached to all power storage devices 20. At this time, in power storage device 20 which is not to be replaced, since welding mark WM of positive electrode lead 61 removed in step S11 is offset from a center portion in plan view, it does not interfere with welding again. Note that, the configuration may be such that, in step S11, power storage device 20 removed from current collector plate 60 is only power storage device 20 in which a failure occurs, and in step S16, power storage device 20 in a normal state taken out from another power storage module 10 is accommodated in container 41 where power storage device 20 in which the failure occurs has existed, and a new welding mark WM is formed at a position offset from previous welding mark WM and used again.

### [Conclusion]

The present disclosure is further described by the following exemplary embodiments.

### Configuration 1:

A power storage module including:
a power storage device including an inner terminal and an outer terminal, and having a cylindrical shape;
a holder that holds one end portion of the power storage device on a first axis; and
an outer lead, in which
the inner terminal and the outer terminal are disposed at the one end portion of the power storage device,
the outer terminal is disposed outside the inner terminal in a radial direction of the power storage device,
the outer lead is connected to the second terminal,
the holder includes a container that accommodates the one end portion of the power storage device, and
the container includes
   an outer opening portion that exposes a part of the outer terminal to which the outer lead is connected, and
   a gap provided at a position different from the outer opening portion and forming a predetermined gap with the outer terminal on a second axis orthogonal to the first axis.

### Configuration 2:

The power storage module according to Configuration 1, further including a plurality of power storage devices, in which
each of the plurality of power storage devices is the power storage device, and
the plurality of power storage devices are held by the holder.

### Configuration 3:

The power storage module according to Configuration 1 or 2, in which
the container includes a plurality of gaps,
the gap is one of the plurality of gaps, and
the plurality of gaps are formed, the plurality of gaps being arranged along a circumferential direction of the power storage device.

### Configuration 4:

The power storage module according to any one of Configurations 1 to 3, in which the outer opening portion and the plurality of gaps are formed at equal intervals in the circumferential direction.

### Configuration 5:

The power storage module according to any one of Configurations 1 to 4, in which the plurality of gaps are formed on a surface of the holder, the surface facing the one end portion of the power storage device, in the container.

### Configuration 6:

The power storage module according to any one of Configurations 1 to 5, in which each of the plurality of gaps is a groove portion or a through-hole formed in the surface facing the one end portion of the power storage device.

### Configuration 7:

The power storage module according to any one of Configurations 1 to 6, further including an inner lead connected to the inner terminal, in which
the container of the holder includes an inner opening portion that exposes a part of the inner terminal to which the inner lead is connected, and
the inner lead is connected to be offset from a central portion of the inner terminal on the second axis.

### Configuration 8:

The power storage module according to any one of Configurations 1 to 7, in which the inner opening portion and the gap are disposed apart from each other in a radial direction of the power storage device.

### Configuration 9:

The power storage module according to any one of Configurations 1 to 8, in which the inner opening portion and the outer opening portion communicate with each other.

### Configuration 10:

The power storage module according to any one of Configurations 1 to 9, in which
the power storage device includes:
   an electrode group including a first electrode and a second electrode;
   an exterior can that has a cylindrical tubular portion accommodating the electrode group, and has an opening formed at one end of the tubular portion; and
   a sealing body that closes the opening in a state of being insulated from the exterior can,
the sealing body is electrically connected to the first electrode, and
the exterior can is electrically connected to the second electrode.

Note that, the present disclosure is not limited to the above-described exemplary embodiment and a modification example thereof, and it is a matter of course that various changes and improvements can be made within the scope of the content described in the claims of the present application.

### REFERENCE MARKS IN THE DRAWINGS

- 10: power storage module
- 20: power storage device
- 21: positive electrode (first electrode)
- 22: negative electrode (second electrode)
- 23: separator
- 24: electrode group
- 25: exterior can
- 25A: groove portion
- 25B: shoulder portion (second terminal or outer terminal)
- 26: sealing body (first terminal or inner terminal)
- 27: positive electrode tab
- 28: negative electrode tab
- 29: gasket
- 30: insulating plate
- 40: upper holder (holder)
- 41: container
- 42: top surface portion
- 43: first opening portion (inner opening portion)
- 44: second opening portion (outer opening portion)
- 45: gap
- 50: lower holder
- 60: current collector plate
- 61: positive electrode lead (first lead or inner lead)
- 62: negative electrode lead (second lead or outer lead)
- 63: opening portion
- 110: power storage module
- 120: power storage device
- 140: upper holder
- 160: current collector plate
- 161: positive electrode lead (first lead or inner lead)
- 162: negative electrode lead (second lead or outer lead)

## Claims

1. A power storage module comprising:
a power storage device including an inner terminal and an outer terminal, and having a cylindrical shape;
a holder that holds one end portion of the power storage device on a first axis; and
an outer lead, wherein
the inner terminal and the outer terminal are disposed at the one end portion of the power storage device,
the outer terminal is disposed outside the inner terminal in a radial direction of the power storage device,
the outer lead is connected to the outer terminal,
the holder includes a container that accommodates the one end portion of the power storage device, and
the container includes
an outer opening portion that exposes a part of the outer terminal to which the outer lead is connected, and
a gap provided at a position different from the outer opening portion and forming a predetermined gap with the outer terminal on a second axis orthogonal to the first axis.

2. The power storage module according to Claim 1, further comprising a plurality of power storage devices, wherein
each of the plurality of power storage devices is the power storage device, and
the plurality of power storage devices are held by the holder.

3. The power storage module according to Claim 1, wherein
the container includes a plurality of gaps,
the gap is one of the plurality of gaps, and
the plurality of gaps are formed, the plurality of gaps being arranged along a circumferential direction of the power storage device.

4. The power storage module according to Claim 3, wherein the outer opening portion and the plurality of gaps are formed at equal intervals in the circumferential direction.

5. The power storage module according to Claim 4, wherein the plurality of gaps are formed on a surface of the holder, the surface facing the one end portion of the power storage device, in the container.

6. The power storage module according to Claim 5, wherein each of the plurality of gaps is a groove portion or a through-hole formed in the surface facing the one end portion of the power storage device.

7. The power storage module according to Claim 1, further comprising an inner lead connected to the inner terminal, wherein
the container of the holder includes an inner opening portion that exposes a part of the inner terminal to which the inner lead is connected, and
the inner lead is connected to be offset from a central portion of the inner terminal on the second axis.

8. The power storage module according to Claim 7, wherein the inner opening portion and the gap are disposed apart from each other in a radial direction of the power storage device.

9. The power storage module according to Claim 8, wherein the inner opening portion and the outer opening portion communicate with each other.

10. The power storage module according to any one of Claims 1 to 9, wherein
the power storage device includes:
an electrode group including a first electrode and a second electrode;
an exterior can that has a cylindrical tubular portion accommodating the electrode group, and has an opening formed at one end of the tubular portion; and
a sealing body that closes the opening in a state of being insulated from the exterior can,
the sealing body is electrically connected to the first electrode, and
the exterior can is electrically connected to the second electrode.
